# EUROPEAN PATENT APPLICATION

(11) **EP 2 116 290 A2**
(43) Date of publication of application: **11.11.2009**
(21) Application number: 09159872.2
(22) Date of filing: 11.05.2009
(51) Int. Cl.: B01D 17/02, B01D 19/00

(54) **Tank for treating oil**

(30) Priority: 09.05.2008 FI 20080154
(71) Applicant: Fluidhouse Oy, 40700 Jyväskylä (FI)
(72) Inventor: Mäkinen, Jarkko, 62100 Lapua (FI); Laukkanen, Alpo, 40400 Jyväskylä (FI); Koponen, Mikko, 40520 Jyväskylä (FI)
(74) Representative: Levlin, Jan Markus

(57) **Abstract**

An oil treatment tank (T) have a tank portion (L) provided with a bottom (7) and at least one oil inlet conduit (1) and at least one oil (O) outlet conduit (6). Inside the tank portion (L) there is at least one internal spiral compartment (3) having at least one spiral guide plate (30), and between the inlet conduit (1) and the internal spiral compartment (3) there is at least one pre-flow equalizer chamber (20) to which the inlet conduit (1) is connected substantially tangentially. In addition, at least partially outside the internal spiral compartment (3) there is at least one external spiral compartment (5) having at least one spiral guide plate (50).

## Description

### Background

The present invention relates to a tank suitable for treating oil.

The flow of oil in traditional oil treatment tanks is often non-uniform. Thus, blind spots are frequently formed in the tanks, thereby causing the oil to remain in the tank for prolonged periods of time without passing into circulation. On the other hand, part of the oil may by-pass through the tank, thereby decreasing the separation of possible impurities, such as air and water, for example, and making the separation defective. Thus, the space of the tank is generally not properly used in this case.

### Description of the invention

We have now invented an oil tank that has its space very effectively in use. In order to achieve this goal, the present invention is characterized by facts that are disclosed in the independent claims. Other preferred embodiments are disclosed in other claims.

The oil treatment tank according to the invention has at least one bottom and one tank portion and at least one inlet conduit for the oil and at least one outlet conduit for the oil. At least one internal spiral compartment inside the tank portion is directly or indirectly connected to the oil inlet conduit, having at least one spiral guide plate, and, in addition, the treatment tank has at least partially outside the internal spiral compartment at least one external spiral compartment, having at least one spiral guide plate in the internal spiral compartment for further treatment of the treated oil, and at least one oil outlet conduit is connected to the external spiral compartment either directly or indirectly.

The fed oil passes from the inlet conduit through the internal spiral compartment into the external spiral compartment and further into the outlet conduit, and the spiral guide plates further substantially enhance the space usage of the oil tank by prolonging, i.a., the path length of the oil and at least partial compartments take as little space as possible. By this technical solution the space of the oil tank is used very efficiently.

E.g., separation of air and water is enhanced in the oil tank according to the invention compared with a conventional oil tank, since the whole volume of the oil is circulated. Thus, the utilization properties of the oil can also be kept good over a prolonged period of time. This technical solution, for its part, enhances the usefulness of the equipment in different applications.

According to one object of the invention, the oil is arranged to be fed into the lower part of the internal spiral compartment and to be discharged from the upper part of the internal spiral compartment into the upper part of the external spiral compartment. From there the oil is arranged to be guided to the lower part of the external spiral compartment, having an outlet conduit arranged therein. By this arrangement the oil is circulated very efficiently, whereby the variation of the flows is equalized and the separation of impurities becomes extremely efficient.

According to one object of the invention, the tank portion of the oil treatment tank is a vertical cylinder and, accordingly, the outer wall of the outer external spiral compartment is also vertical. The internal spiral compartment and other possible external spiral compartments can also be vertical cylinders. This technical structural solution is extremely simple to manufacture. The tank portion/spiral compartments according to the invention can be realized technically advantageously also as vertical cones/cones, for example.

According to one aspect of the invention, a pre-flow equalizer chamber inside the tank portion is connected to the inlet conduit in order to equalize the flow of the oil. This further equalizes the flow of the oil, thereby further enhancing the space usage of the oil tank.

According to one object of the invention, a pre-flow equalizer chamber, which is a vertical tank, is connected to the inlet conduit, and the inlet conduit is substantially tangentially connected to the pre-flow equalizer chamber. The flow of the oil in the oil tank is thus further enhanced, since the tangential flow promotes internal mixing thus enhancing efficient usage of the oil tank.

According to one object of the invention, the treatment tank has before the internal spiral compartment at least one filtering compartment for treating the fed oil. This for its part enhances separation of impurities. It also equalizes internal flows in the oil and simultaneously eliminates by-passing flows, for example.

According to one object of the invention, the oil is arranged to be guided from the filtering compartment into the internal spiral compartment substantially vertically. This for its part further improves elimination of impurities and also equalizes internal flows, preventing blind spots from forming into the tank.

According to one object of the invention, the filtering compartment has a pre-filter for treating the oil. According to one aspect of the invention, the filtering compartment has a perforated plate for equalizing the flow of the oil. These technical solutions further balance the flow of oil and also enhance the operation of the equipment and the quality of oil.

According to one object of the invention, the oil tank has at least one oil outlet guide part for guiding the oil flow efficiently into the outlet conduit. This further enhances usage of the tank, preventing any by-pass flows and refluency in outlet. Preferably, the outlet guide part is connected under the internal spiral part and oil is arranged to be directed from the lower compartment of the external spiral compartment upwards to the outlet guide part and further downwards from the outlet guide part into the outlet opening of the outlet conduit. This arrangement further enhances separation of impurities.

According to one object of the invention, the internal spiral compartment has an at least partially angled bottom and at least one outlet conduit for impurities. This solution enhances elimination of impurities from the oil tank.

According to one aspect of the invention, the bottom of the treatment tank is at least partially angled. This further enhances elimination of impurities from the oil. Thus, the angled bottom further enhances space usage of the oil tank. In order to enhance removal of impurities and equalization of the flow, the outlet opening of the outlet conduit is preferably at a distance from the bottom of the treatment tank.

The oil treatment tank according to the invention can be employed in numerous applications. Moreover, the size and capacity of the apparatus can vary freely. The assembly of the equipment can also vary. The oil tank according to the invention may be employed, e.g., in applications where the viscosity of the oil is 10-460 cSt, such as 100-320 cSt. Such applications include, e.g., hydraulic tanks and oil circulating lubrication tanks.

### Detailed description of the invention

Some applications of the invention will now be described in detail by referring to the attached drawings.

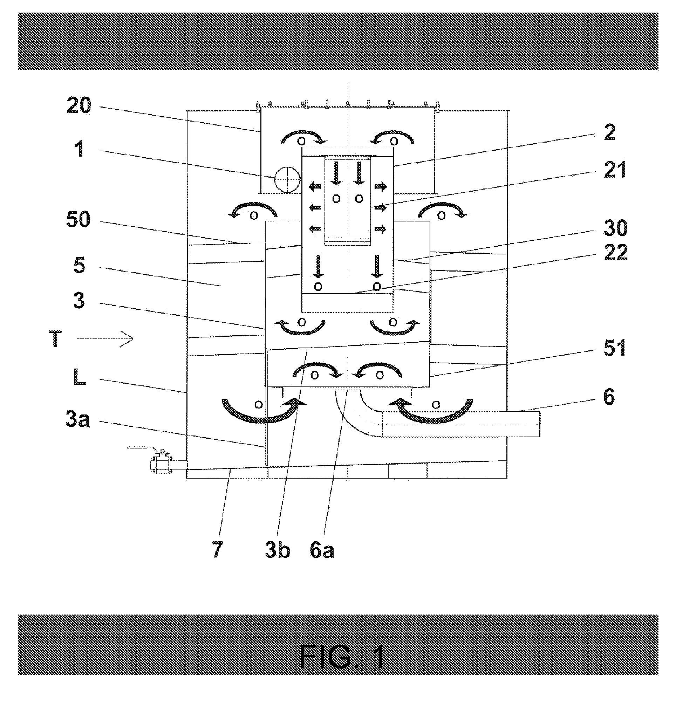

FIG 1 is a cross sectional view of the oil tank.

FIG. 1 shows a cross sectional view of the oil tank T. It has a tank portion L, having one internal spiral compartment 3 inside, which compartment has two spiral guide plates 30. The inlet conduit 1 of the oil O is indirectly connected to the internal spiral compartment 3 through the pre-flow equalizer chamber 20 inside the tank portion L. Inside the tank portion L there is an external spiral compartment 5 outside the internal spiral compartment 3, having two spiral guide plates 50 in the internal spiral compartment 3 for further treatment of the treated oil and the treatment tank has an outlet conduit 6 of the oil O. The pre-flow equalizer chamber 20 connected to the inlet conduit 1 and the internal spiral compartment 3 equalizes flow of the oil O inside the tank portion L. The inlet conduit 1 is connected substantially tangentially to the pre-flow equalizer chamber 20. The treatment tank T has an outlet conduit 6 attached directly to the external spiral compartment 5. Oil O is arranged to be fed into the lower part of the internal spiral compartment 3 and to be discharged from the upper part of the internal spiral compartment 3 into the upper part of the external spiral compartment 5. From there oil O is arranged to be guided into the lower part of the external spiral compartment 5.

The internal spiral compartment 3 has an angled bottom 3b and an outlet conduit 3a for guiding the impurities to the bottom of the oil tank 7. The bottom 7 of the treatment tank T is also angled for separating oil impurities from the oil O. In order to enhance elimination of impurities and equalization of flow, the outlet opening 6a of the outlet conduit 6 is at a distance from the bottom 7 of the treatment tank T.

Before the internal spiral compartment 3, the treatment tank T has a filtering compartment 2 for treating the fed oil O. The oil is arranged to be guided from the filtering compartment 2 into the internal spiral compartment 3 substantially vertically. The filtering compartment 2 has a pre-filter 21 and a perforated plate 22 for equalizing the flow of the oil O.

Additionally, the oil tank T has inside the tank portion L one oil outlet guide part 51 for guiding the flow of the oil O efficiently into the outlet opening 6a of the outlet conduit 6. The outlet guide portion 51 is connected under the internal spiral part 3 and oil O is arranged to be directed from the lower compartment of the external spiral compartment 5 upwards into the outlet guide portion 51 and further downwards from the outlet guide portion 51 into the outlet opening 6a of the outlet conduit 6.

## Claims

1. An oil treatment tank (T) having a tank portion (L) provided with a bottom (7) and at least one oil inlet conduit (1) and at least one oil (O) outlet conduit (6), **characterized in that** inside the tank portion (L) there is at least one internal spiral compartment (3), having at least one spiral guide plate (30), and between the inlet conduit (1) and the internal spiral compartment (3) there is at least one pre-flow equalizer chamber (20), to which the inlet conduit (1) is connected substantially tangentially, and that the treatment tank (T) has, in addition, at least partially outside the internal spiral compartment (3) at least one external spiral compartment (5), having at least one spiral guide plate (50) in the internal spiral compartment (3) for further treatment of the treated oil, and that at least one oil (O) outlet conduit (6) is connected to the external spiral compartment either directly or indirectly.

2. Oil treatment tank according to claim 1, **characterized in that** the oil is arranged to be guided into the internal spiral compartment (3) substantially vertically.

3. Oil treatment tank according to claim 1 or claim 2, **characterized in that** before the internal spiral compartment (3) the treatment tank (T) has at least one filtering compartment (2) for treating the oil (O).

4. Oil treatment tank according to claim 3, **characterized in that** the filtering compartment (2) has a pre-filter (21) for treating the oil (O).

5. Oil treatment tank according to claim 3 or claim 4, **characterized in that** the filtering compartment (2) has a perforated plate (22) for equalizing the flow of oil (O).

6. Oil treatment tank according to any of the preceding claims, **characterized in that** the internal spiral compartment (3) has an at least partially angled bottom (3b) and at least one outlet conduit (3a) for eliminating impurities.

7. Oil treatment tank according to any of the preceding claims, **characterized in that** the bottom (7) of the treatment tank (T) is at least partially angled for separating oil impurities from the oil (O).

8. Oil treatment tank according to any of the preceding claims, **characterized in that** the outlet opening (6a) of the outlet conduit (6) is at a distance from the bottom (7) of the treatment tank (T).

9. Oil treatment tank according to any of the preceding claims, **characterized in that** the oil (O) is lubrication oil having viscosity of 10 to 460 cSt.

10. Method for manufacturing an oil treatment tank (T) having a tank portion (L) provided with a bottom (7) and at least one oil inlet conduit (1) and at least one oil (O) outlet conduit (6), **characterized in that** inside the tank portion (L) there is arranged at least one internal spiral compartment (3), having at least one spiral guide plate (30), and between the inlet conduit (1) and the internal spiral compartment (3), there is arranged at least one pre-flow equalizer chamber (20), to which the inlet conduit (1) is connected substantially tangentially, and, in addition, at least one external spiral compartment (5) is connected to the treatment tank (T) at least partially outside the internal spiral compartment (3), having at least one spiral guide plate (50) in the internal spiral compartment (3) for further treatment of the treated oil, and that at least one oil (O) outlet conduit (6) is connected to the external spiral compartment (5) either directly or indirectly.

11. The use of an oil treatment tank (T) according to any of claims 1 to 9 in applications having oil O viscosity from 10 to 460 cSt.

12. The use of an oil treatment tank (T) according to any of claims 1 to 9 as a hydraulic tank or a circulation lubrication tank.
